# EUROPEAN PATENT APPLICATION

(11) **EP 4 351 018 A1**
(43) Date of publication of application: **10.04.2024**
(21) Application number: 21943450.3
(22) Date of filing: 31.05.2021
(51) Int. Cl.: H04B 1/40, H04B 1/00, H04B 17/00

(54) **CONTROL METHOD AND APPARATUS FOR RADIO FREQUENCY CIRCUIT**

(71) Applicant: Beijing Xiaomi Mobile Software Co., Ltd., Beijing 100085 (CN)
(72) Inventor: GUO, Shengxiang, Beijing 100085 (CN)
(74) Representative: Hughes, Andrea Michelle
(86) International application number: PCT/CN2021/097469
(87) International publication number: WO 2022/252074

(57) **Abstract**

Embodiments of the present disclosure disclose a control method and apparatus for a radio frequency circuit, which can be used in the technical field of communications. The method comprises: determining, according to the working mode of a terminal device where a radio frequency circuit is located and the type of the radio frequency circuit, a manner in which the radio frequency circuit transmits a signal and receives a signal. Therefore, by multiplexing the radio frequency circuit in the terminal device, a detection function can be achieved, thereby further enriching the function of the terminal device without increasing the hardware burden of the terminal device.

## Description

### TECHNICAL FIELD

The present disclosure relates to a field of communication technologies, and particularly to a method and an apparatus for controlling a radio frequency (RF) circuit.

### BACKGROUND

Generally, a terminal device may first send electromagnetic waves when performing a wireless sensing and detection, and an object on a transmission path may reflect back a signal. The terminal device determines a range, a speed and an angle of the object by capturing the reflected signal. In order to make the terminal device possess a capability of wireless sensing and detection, it is generally necessary to design a circuit, place a radar chip, and the like in the terminal device, which may cause pressures on hardware deployment of the terminal device. Therefore, it becomes an urgent problem to be solved about how to achieve wireless sensing and detection of the terminal device.

### SUMMARY

A method and an apparatus for controlling a radio frequency (RF) circuit are provided in embodiments of the disclosure, and are applicable to a field of communication technologies.

In a first aspect, a method for controlling a radio frequency (RF) circuit is provided in embodiments of the present disclosure. The method includes: determining a mode of sending and receiving a signal by the RF circuit, based on a working mode of a terminal device where the RF circuit is located and a type of the RF circuit.

In the solution, the mode of sending and receiving the signal by the RF circuit may be determined based on the working mode of the terminal device where the RF circuit is located and the type of the RF circuit. Therefore, a detection function of the terminal device may be achieved by multiplexing the RF circuit in the terminal device, which further enriches the functions of the terminal device without increasing a hardware burden of the terminal device.

Optionally, determining the mode of sending and receiving the signal by the RF circuit, based on the working mode of the terminal device where the RF circuit is located and the type of the RF circuit includes:
determining a mode of sending a detection signal and receiving a detection feedback signal by the RF circuit, based on the type of the RF circuit, in response to the terminal device working in a detection mode.

Optionally, determining the mode of sending the detection signal and receiving the detection feedback signal by the RF circuit based on the type of the RF circuit includes:
determining that the RF circuit sends the detection signal and receives the detection feedback signal by adopting different antennas, in response to a sending circuit and a reflection circuit in the RF circuit respectively adopting the different antennas.

Optionally, determining that the RF circuit sends the detection signal and receives the detection feedback signal by adopting the different antennas includes:
determining that the sending circuit is connected to a main antenna to send the detection signal, and the reflection circuit is connected to a receiving diversity antenna to receive the detection feedback signal, in response to the RF circuit working in a time division duplex (TDD) frequency band within a first frequency range (FR1).

Optionally, the RF circuit includes two RF sub-circuits, and each of the two RF sub-circuits includes a sending circuit and a reflection circuit, and determining that the RF circuit sends the detection signal and receives the detection feedback signal by adopting the different antennas includes:
determining that a sending circuit in one of the two RF sub-circuits is connected to a corresponding antenna array to send the detection signal, and a reflection circuit in the other of the two RF sub-circuits is connected to a corresponding antenna array to receive the detection feedback signal, in response to the RF circuit working in a time division duplex (TDD) frequency band within a second frequency range (FR2).

Optionally, determining that the RF circuit sends the detection signal and receives the detection feedback signal by adopting the different antennas includes:
determining that the sending circuit in the RF circuit is connected to a main antenna to send the detection signal, and a receiving diversity antenna in the RF circuit is connected to the reflection circuit to receive the detection feedback signal, in response to the RF circuit working in a frequency division duplex (FDD) frequency band within a first frequency range (FR1).

Optionally, determining the mode of sending the detection signal and receiving the detection feedback signal by the RF circuit based on the type of the RF circuit in the terminal device includes:
determining that the RF circuit sends the detection signal and receives the detection feedback signal by adopting a same antenna, in which the sending circuit for sending the detection signal in the terminal device is connected to the reflection circuit for receiving the detection feedback signal via an isolating circuit.

Optionally, determining that the RF circuit sends the detection signal and receives the detection feedback signal by adopting the same antenna includes:
determining that the sending circuit in the RF circuit is connected to a main antenna via the isolating circuit to send the detection signal, and the reflection circuit in the RF circuit is connected to the main antenna via the isolating circuit to receive the detection feedback signal, in response to the RF circuit working in a time division duplex (TDD) frequency band within a first frequency range (FR1) or working in a frequency division duplex (FDD) frequency band within the FR1, in which the isolating circuit is configured to isolate the reflection circuit from a sending signal generated by the sending circuit, and isolate the detection feedback signal received from the main antenna from the sending circuit.

Optionally, determining that the RF circuit sends the detection signal and receives the detection feedback signal by adopting the same antenna includes:
determining that the sending circuit in the RF circuit is connected to an antenna unit via the isolating circuit to send the detection signal, and the reflection circuit in the RF circuit is connected to the antenna unit via the isolating unit to receive the detection feedback signal, in response to the RF circuit working in a time division duplex (TDD) frequency band within a second frequency range (FR2).

In a second aspect, a communication apparatus is provided in embodiments of the disclosure. The communication apparatus has a part of or all functions in the method as described in the first aspect. For example, the functions of the communication apparatus may possess the functions in a part of or all the embodiments in the disclosure or may possess the functions of performing any one embodiment in the disclosure separately. The functions may be implemented by a hardware, or by a hardware to execute a corresponding software. The software or hardware includes one or more units or modules corresponding to the above functions.

In an implementation, a structure of the communication apparatus may include a transceiving module and a processing module. The processing module is configured to support the communication apparatus to perform corresponding functions in the above method. The transceiving module is configured to support a communication between the communication apparatus and other devices. The communication apparatus may further include a storage module for coupling the transceiving module with the processing module and store a computer program and data needed by the communication apparatus.

As an example, the processing module may be a processor, the transceiving module may be a transceiver or a communication interface, and the storage module may be a memory.

In a third aspect, a communication device is provided in embodiments of the disclosure. The communication device includes a processor. When the processor calls a computer program in the memory, the method as described in the first aspect is performed.

In a fourth aspect, a communication device is provided in embodiments of the disclosure. The communication device includes a processor and a memory. The memory is stored with a computer program; and the processor executes the computer program stored in the memory, so that the communication device performs the method as described in the first aspect.

In a fifth aspect, a communication device is provided in embodiments of the disclosure. The device includes a processor and an interface circuit. The interface circuit is configured to receive code instructions and send the code instructions to the processor. The processor is configured to run the code instructions so that the device performs the method as described in the above first aspect.

In a sixth aspect, a system for controlling a radio frequency (RF) circuit is provided in embodiments of the disclosure. The system includes the communication apparatus as described in the second aspect, or the system includes the communication device as described in the third aspect, or the system includes the communication device as described in the fourth aspect, or the system includes the communication device as described in the fifth aspect.

In a seventh aspect, a computer-readable storage medium is provided in embodiments of the present disclosure. The computer-readable storage medium is configured to store instructions. When the instructions are executed, the method as described in the first aspect is implemented.

In an eighth aspect, a computer program product including a computer program is provided in embodiments of the present disclosure. When the computer program is running on a computer, the computer is caused to perform the method as described in the first aspect.

In a ninth aspect, a system on chip (SOC) is provided in the disclosure. The SOC includes at least one processor and an interface, which is configured to perform the functions involved in the first aspect, for example, to determine or process at least one of data and information involved in the above methods. In a possible design, the SOC further includes a memory. The memory is configured to save the needed computer program and data. The SoC may consist of a chip, or may include a chip and other discrete devices.

In a tenth aspect, a computer program is provided in the present disclosure. When the computer program is running on a computer, the computer is caused to perform the method as described in the first aspect.

### BRIEF DESCRIPTION OF THE DRAWINGS

In order to explain the embodiments of the disclosure or technical solutions in the background more clearly, the drawings used in the embodiments of the disclosure or in the background will be briefly introduced below.
FIG. 1 is an architecture diagram illustrating a communication system according to an embodiment of the present disclosure.
FIG. 2 is a structural diagram illustrating a terminal device according to an embodiment of the present disclosure.
FIG. 3 is a structural diagram illustrating a terminal device according to an embodiment of the present disclosure.
FIG. 4 is a structural diagram illustrating a terminal device according to an embodiment of the present disclosure.
FIG. 5 is a structural diagram illustrating a terminal device according to an embodiment of the present disclosure.
FIG. 6 is a structural diagram illustrating a terminal device according to an embodiment of the present disclosure.
FIG. 7 is a structural diagram illustrating a terminal device according to an embodiment of the present disclosure.
FIG. 8 is a flowchart illustrating a method for controlling a radio frequency (RF) circuit according to another embodiment of the present disclosure.
FIG. 9 is a flowchart illustrating a method for controlling a radio frequency (RF) circuit according to another embodiment of the present disclosure.
FIG. 10 is a flowchart illustrating a method for controlling a radio frequency (RF) circuit according to another embodiment of the present disclosure.
FIG. 11 is a structural diagram illustrating a communication apparatus in an embodiment of the present disclosure.
FIG. 12 is a structural diagram illustrating a communication device in another embodiment of the present disclosure.
FIG. 13 is a structural diagram illustrating a chip in an embodiment of the present disclosure.

### brief description of the drawings:

31-RF circuit; 32-antenna unit; 33-amplifier; 34-first filter; 35-second filter; 41-RF circuit; 42-antenna unit; 43-switch unit; 44-first antenna array; 45-second antenna array; 46-first switch; 47-second switch; 48-RF circuit; 49-first RF sub-circuit; 410-second RF sub-circuit; 411-first analog-to-digital converter (ADC); 412-first digital-to-analog converter (DAC); 413-first mixer; 414-first power divider; 415-second power divider; 416-first phase shifter; 417-first amplifier; 418-second amplifier; 419-third switch; 420-first antenna element; 421-second antenna element; 422-third antenna element; 423-fourth antenna element; 424-second ADC; 425-secondADC; 426-second mixer; 427-third power divider; 428-fourth power divider; 429-second phase shifter; 430-third amplifier; 431-fourth amplifier; 432-fourth switch; 433-fifth antenna element; 434-sixth antenna element; 435-seventh antenna element; 436-eighth antenna element; 51-RF circuit; 52-antenna unit; 53-first switch unit; 54-amplifier; 55-filtering unit; 56-a second switching unit; 57-a first filter; 58-a second filter; 59-a mixer; 61-RF circuit; 62-a switching unit; 63-a first switch; 71-switch unit; 72-first switch; 73-second switch; 74-first amplifier; 75-first filter; 76-fourth switch; 77-first circulator; 78-third switch; 79-first receiver protector; 710-first mixer; 711-second filter; 712-second amplifier; 713-sixth switch; 714-second circulator; 715-fifth switch; 716-second receiver protector; 717-second mixer; 718-filter unit; 719-ADC; 720-DAC; 721-third mixer; 722-first power divider; 723-second power divider; 724-third power divider; 725-first phase shifter; 726-third amplifier; 727-fourth amplifier; 728-eighth switch; 729-third circulator; 730-seventh switch; 731-third receiver protector; 732-fourth mixer.

### DETAILED DESCRIPTION

For convenience of understanding, the terms involved in the disclosure are introduced first.
1. Generally, based on a 3rd Generation Partner Project (3GPP) agreement, a 5G frequency may be divided into a frequency range 1 (FR1) frequency band and a frequency range 2 (FR2) frequency band. A frequency range of the FR1 frequency band is 450 million hertz (MHz) to 6 giga hertz (GHz), and a frequency range of the FR2 frequency band is 24.25 GHz to 52.6 GHz, which may also be referred to as a millimeter wave (mmWave).
2. Duplex communication

Duplex communication may be divided in frequency or time. The duplex communication divided in frequency is referred to as frequency division duplexing (FDD) and the duplex communication divided in time is referred to as time division duplexing (TDD).

For the FDD, different frequency bands are adopted in uplink and downlink, and frequency bandwidths of the uplink and the downlink are generally identical. For the TDD, the same frequency band is adopted in the uplink and the downlink. The time occupied by the uplink and downlink in one frequency band may be adjusted as needed, and the time occupied by the uplink and downlink is generally divided into a plurality of time periods at fixed intervals, which are referred to as slots.

3. Radio frequency (RF) circuit
In the disclosure, the RF circuit in the terminal device may be a circuit in the terminal device for sending and receiving the RF signal, or may be a circuit for modulating a signal and sending the signal, receiving a signal and demodulating the received signal in the terminal device.

4. An antenna array, also referred to as a phased array, is usually a group of antennas consisting of two or more antennas. The antennas are combined with each other via a signal, thereby achieving a higher performance than a single antenna.
"a plurality of' in the present disclosure means two or above, which is similar to other quantifiers. "and/or", describes the relationship of the association objects, indicating that there may exist three relationships, for example, A and/or B, may represent: existing A only, existing both A and B, or existing B only. The singular forms "alan", "the" and "said" are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or an importance degree. In fact, "first", "second" and other similar expressions may be used interchangeably.

It may be further understood that, even though the operations in the embodiments of the disclosure are described in the drawings in a particular order, it should not be understood as requiring that such operations be performed in the shown particular order or in a sequential order, or that all the shown operations be performed to obtain desired results. In certain circumstances, multitasking and parallel processing may be advantageous. In order to understand the method for controlling the RF circuit in the embodiments of the present disclosure better, a communication system to which the terminal device in the embodiments of the present disclosure is applicable is described below.

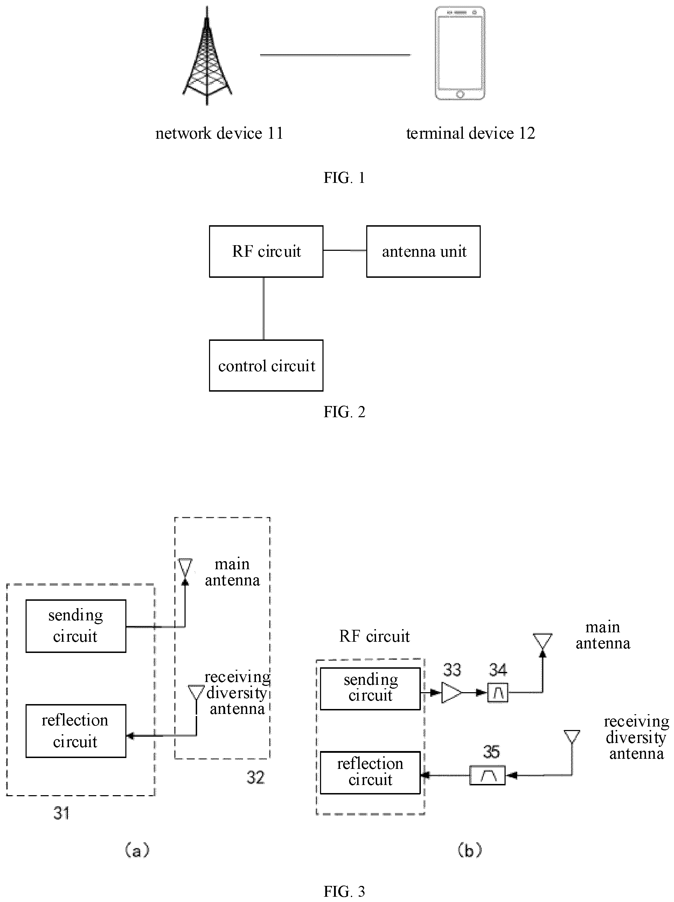

As illustrated in FIG. 1, FIG. 1 is an architecture diagram illustrating a communication system according to embodiments of the present disclosure. The communication system may include, but is not limited to, one network device and one terminal device, a number and a form of the devices shown in FIG. 1 are only for example and do not constitute a limitation to embodiments of the present disclosure. Two or more network devices and two or more terminal devices may be included in practical applications. The communication system 100 as illustrated in FIG. 1 includes one network device 11 and one terminal device 12 for example.

It needs to be noted that the technical solution in embodiments of the present disclosure is applicable to various communication systems. For example, a long term evolution (LTE) system, a 5th generation (5G) mobile communication system, a 5G new radio (NR) system or other future new mobile communication systems.

The network device 11 in the embodiments of the disclosure is an entity for sending or receiving a signal at a network side. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in the embodiments of the present disclosure. The network device according to the embodiments of the present disclosure may consist of a central unit (CU) and a distributed unit (DU). The CU may also be referred to as a control unit, and a network device such as protocol layers of a base station, may be split by using a structure of the CU-DU, the functions of a part of protocol layers are placed in the CU for centralized control, and the functions of a remaining part or all of the protocol layers are distributed in the DU, and the DU is centrally controlled by the CU.

The terminal device 12 in the embodiments of the disclosure is an entity for receiving or sending a signal at a user side, for example, a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart home, etc. A specific technology and a specific device form adopted by the terminal device are not limited in embodiments of the present disclosure.

It may be understood that, the communication system described in the embodiments of the present disclosure are intended to explain a working environment of a terminal device in a non-detection mode in the embodiments of the present disclosure more clearly, and does not constitute a limitation to the technical solutions proposed in the embodiments of the present disclosure. Those skilled in the art know that, with evolution of a system architecture and emergence of a new service scenario, the technical solutions according to embodiments of the present disclosure are equally applied to similar technical problems.

A method and an apparatus for controlling a radio frequency (RF) circuit according to the disclosure are described in combination with accompanying drawings.

Referring to FIG. 2, FIG. 2 is a structural diagram illustrating a terminal device according to an embodiment of the present disclosure. As illustrated in FIG 2, the terminal device may include an RF circuit, a control circuit and an antenna unit.

The RF circuit may be connected to the antenna unit.

In addition, the control circuit is connected to the RF circuit, so that the RF circuit may be controlled to send and receive a signal based on a working mode of the terminal device and a type of the RF circuit.

It needs to be noted that, a structure and an implementation of the control circuit are not limited in the disclosure, and any circuit or structure that may implement the mode of sending and receiving the signal by the terminal device are within the protection scope of the disclosure.

In addition, there may be a variety of working modes of the terminal device. For example, the working mode may be a detection mode, or may be a non-detection mode, which is not limited in the disclosure.

In the detection mode, the terminal device may send a detection signal, receive a detection feedback signal reflected by an object, and determine a range, a speed, an angle or the like of the object based on the received detection feedback signal. The non-detection mode may be any other mode than the detection mode described above. It is not limited in the present disclosure.

In addition, there may be a variety of types of RF circuit. For example, a sending circuit and a reflection circuit in the RF circuit may adopt different antennas respectively, or may adopt the same antenna, which are not limited in the disclosure.

In embodiments of the disclosure, when the terminal device is in a different working mode, a mode of sending and receiving a signal by the RF circuit may be determined based on the type of the RF circuit.

Optionally, the RF circuit may be controlled to send a detection signal and receive a detection feedback signal, so that the terminal device achieves a detection function by using the RF circuit. Alternatively, the RF circuit may be controlled to send an RF signal and receive the RF signal, so that the terminal device achieves a non-detection function by using the RF circuit. Therefore, a detection function may be achieved by multiplexing the RF circuit in the terminal device, which further enriches the function of the terminal device without increasing a hardware burden of the terminal device.

By implementing the embodiments of the disclosure, the RF circuit may be controlled to send and receive the signal based on the working mode of the terminal device and the type of the RF circuit. Therefore, a detection function may be achieved by multiplexing the RF circuit in the terminal device, which further enriches the function of the terminal device without increasing a hardware burden of the terminal device.

Referring to FIG. 3, FIG. 3 is a structural diagram illustrating a terminal device according to an embodiment of the present disclosure.

As illustrated in FIG. 3(a), the terminal device may include an RF circuit (31) and an antenna unit (32).

The RF circuit (31) may include a sending circuit and a reflection circuit.

In addition, the antenna unit (32) may include a main antenna and a receiving diversity antenna. The sending circuit is connected to the main antenna, and the reflection circuit is connected to the receiving diversity antenna.

It may be seen from FIG. 3(a) that, in the embodiments of the disclosure, the sending circuit and the reflection circuit in the terminal device are respectively connected to different antennas. When the terminal device works in a TDD frequency band within a FR1, there may be no signal interference between the sending circuit and the reflection circuit. Therefore, the detection function may be achieved by directly multiplexing the sending circuit and the reflection circuit in the terminal device.

Correspondingly, the control circuit may be specifically configured to control the sending circuit in the RF circuit to send a detection signal via the main antenna, and control the reflection circuit in the RF circuit to receive a detection feedback signal via the receiving diversity antenna, in response to determining that the terminal device works in a detection mode and the RF circuit works in the TDD frequency band within the FR1.

It needs to be noted that, the reflection circuit in the embodiment of the disclosure is a multiplexed receiving circuit in the RF circuit in the terminal device.

It needs to be noted that, a control circuit is not shown in the diagram of FIG. 3(a), and an implementation principle and an implementation form of the control circuit may refer to the description of other embodiments of the disclosure, which is not limited in the disclosure.

Further, a diagram in the terminal device may be adjusted as needed in actual use.

For example, in the diagram shown in FIG.3(b), a sending circuit is connected to an amplifier (33), the amplifier (33) is connected to a first filter (34), and the first filter (34) is connected to a main antenna, and a receiving diversity antenna is connected to a second filter (35), and the second filter (35) is connected to a reflection circuit again.

It can be seen from FIG.3 (b) that when the terminal device works in the detection mode and the RF circuit works in the TDD frequency band within the FR1, a detection signal may be generated by the sending circuit, input to the main antenna via the amplifier (33) and the first filter (34), and output by the main antenna. As such, the detection signal is sent. When a detection feedback signal is received, the detection feedback signal may be input by the receiving diversity antenna to the reflection circuit via the second filter (35). As such, the detection feedback signal is received by the reflection circuit. The detection function of the terminal device may be achieved by multiplexing the sending circuit and the reflection circuit of the RF circuit.

It needs to be noted that, the reflection circuit in the embodiment of the disclosure is a multiplexed receiving circuit in the RF circuit.

It needs to be noted that, a control circuit is not shown in the diagram of FIG. 3(b), and an implementation principle and an implementation form of the control circuit may refer to the description of other embodiments of the disclosure, which is not limited in the disclosure.

It needs to be noted that, the main antenna and the receiving diversity antenna may be adjusted as needed in actual use, which are not limited in the disclosure.

By implementing the embodiment of the disclosure, when the terminal device works in the detection mode and the RF circuit works in the TDD frequency band within the FR1, the sending circuit in the RF circuit may be controlled to send the detection signal via the main antenna, and the reflection circuit in the RF circuit may be controlled to receive the detection feedback signal via the receiving diversity antenna,. Therefore, the detection function may be achieved by multiplexing the RF circuit in the terminal device, which further enriches the functions of the terminal device without increasing a hardware burden of the terminal device.

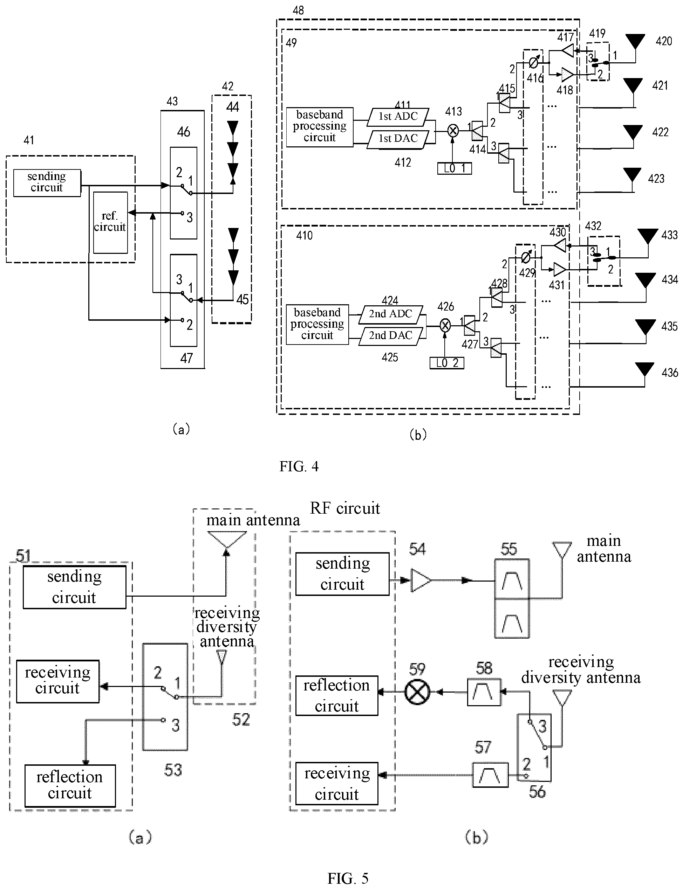

Referring to FIG. 4, FIG. 4 is a structural diagram illustrating a terminal device according to an embodiment of the present disclosure.

As illustrated in FIG. 4(a), an RF circuit (41) in the terminal device may include a sending circuit and a reflection circuit, and an antenna unit (42) may include two antenna arrays, for example, respectively a first antenna array (44) and a second antenna array (45).

In addition, a first connection end (1) of a first switch (46) in a switch unit (43) is connected to the first antenna array (44), a second connection end (2) of the first switch (46) is connected to the sending circuit in the RF circuit, and a third connection end (3) of the first switch (46) is connected to the reflection circuit in the RF circuit.

In addition, a first connection end (1) of a second switch (47) in the switch unit (43) is connected to the second antenna array (45), a second connection end (2) of the second switch (47) is connected to the sending circuit, and a third connection end (3) of the second switch (46) is connected to the reflection circuit.

It needs to be noted that, the reflection circuit in the embodiment of the disclosure is a multiplexed receiving circuit in the RF circuit.

It needs to be noted that, a control circuit is not shown in the diagram of FIG. 4(a), and an implementation principle and an implementation form of the control circuit may refer to the description of other embodiments of the disclosure, which is not limited in the disclosure.

It may be seen from FIG. 4(a) that, in the embodiment of the disclosure, the sending circuit and the reflection circuit in the terminal device are respectively connected to different antenna arrays, that is, when the terminal device works in the TDD frequency band within the FR2, there may be no signal interference between the sending circuit and the reflection circuit. Therefore, the detection function may be achieved by directly multiplexing the sending circuit and the reflection circuit in the terminal device.

Correspondingly, the control circuit may be specifically configured to control the first connection end (1) of the first switch (46) to connect with the second connection end (2) and control the first connection end (1) of the second switch (47) to connect with the third connection end (3), in response to determining that terminal device works in the detection mode and the RF circuit works in the TDD frequency band within the FR2. That is, the sending circuit is connected to the first antenna array (44) via the first switch (46) to send the detection signal; and the reflection circuit is connected to the second antenna array (45) via the second switch (47) to receive the detection feedback signal.

Alternatively, the control circuit may further control the first connection end (1) of the second switch (47) to connect with the second connection end (2) and control the first connection end (1) of the first switch (46) to connect with the third connection end (3), in response to determining that the terminal device works in the detection mode and the RF circuit works in the TDD frequency band within the FR2. That is, the sending circuit is connected to the second antenna array (45) via the second switch (47) to send the detection signal; and the reflection circuit is connected to the first antenna array (44) via the first switch (46) to receive the detection feedback signal.

Further, a circuit diagram may be adjusted as needed in actual use.

It may be understood that there may be a plurality of elements in the antenna array. For example, in the diagram shown in FIG. 4(b), an RF circuit (48) may include a first RF sub-circuit (49) and a second RF sub-circuit (410), which may be referred to as symmetrical circuits. In addition, there are four antenna elements in the first antenna array and the second antenna array respectively.

The baseband processing circuit in the first RF sub-circuit (49) may be connected to a first ADC (411) and a first DAC (412) respectively, the first ADC (411) and the first DAC (412) are respectively connected to a first mixer (413), the first mixer (413) is connected to a connection end (1) of a first power divider (414), a connection end (2) of the first power divider (414) is connected to a connection end (1) of a second power divider (415), a connection end (2) of the second power divider (415) is connected to a first phase shifter (416), the first phase shifter (416) is connected to a first amplifier (417) and a second amplifier (418) respectively, the other end of the first amplifier (417) is connected to a third connection end (3) of a third switch (419), the other end of the second amplifier (418) is connected to a second connection end (2) of the third switch (419), and a first connection end (1) of the third switch (419) is connected to a first antenna element (420) in the first antenna array. Antenna elements in the first antenna array are the first antenna element (420), a second antenna element (421), a third antenna element (422) and a fourth antenna element (423), respectively.

It may be understood that, the subsequent connection circuit of the connection end (3) of the second power divider (415) is the same as the subsequent connection circuit of the connection end (2) of the second power divider (415). Correspondingly, the subsequent connection circuit of the connection end (3) of the first power divider (414) is the same as the subsequent connection circuit of the connection end (2) of the first power divider (414), which will not be repeated here.

In addition, the baseband processing circuit in the second RF sub-circuit (410) may be connected to a second ADC (424) and a second DAC (425) respectively, the second ADC (424) and the second DAC (425) are respectively connected to a second mixer (426), and the second mixer (426) is connected to a connection end (1) of a third power divider (427), a connection end (2) of the third power divider (427) is connected to a connection end (1) of a fourth power divider (428), a connection end (2) of the fourth power divider (428) is connected to a second phase shifter (429), the second phase shifter (429) is connected to a third amplifier (430) and a fourth amplifier (431) respectively, the other end of the third amplifier (430) is connected to a third connection end (3) of a fourth switch (432), the other end of the fourth amplifier (431) is connected to a second connection end (2) of the fourth switch (432), and a first connection end (1) of the fourth switch (432) is connected to a fifth antenna element (433) in the second antenna array. Antenna elements in the second antenna array are the fifth antenna element (433), a sixth antenna element (434), a seventh antenna element (435) and an eighth antenna element (436), respectively.

It may be understood that, the subsequent connection circuit of the connection end (3) of the fourth power divider (428) is the same as the subsequent connection circuit of the connection end (2) of the fourth power divider (428). Correspondingly, the subsequent connection circuit of the connection end (3) of the third power divider (427) is the same as the subsequent connection circuit of the connection end (2) of the third power divider (427), which will not be repeated here.

It can be seen from FIG. 4(b) that when the terminal device works in the detection mode and the RF circuit works in the TDD frequency band within the FR2, the first connection end (1) of the third switch (419) may be connected with the second connection end (2), a local oscillator signal 1 (Lo1) may be added to the first mixer (413), and the detection signal may be sent via the first antenna element (420) under the actions of the first power divider (414), the second power divider (415), the first phase shifter (416) and the second amplifier (418). The first connection end (1) of the fourth switch (432) may be connected with the third connection end (3), so that the detection feedback signal reflected by the object may be processed by the fifth antenna element (433), the third amplifier (430), the second phase shifter (429), the fourth power divider (428), and the third power divider (427), and may be then processed with a local oscillator signal 2 (Lo2) in the second mixer (426), and may be then processed by the second ADC (424), the second DAC (425) and the baseband processing circuit, so as to obtain the detection feedback signal.

Alternatively, when the terminal device works in the detection mode and the RF circuit works in the TDD frequency band within the FR2, the first connection end (1) of the fourth switch (432) is connected with the second connection end (2) to send the detection signal, and the first connection end (1) of the third switch (419) is connected with the second connection end (3), to receive the detection feedback signal.

It needs to be noted that, the devices such as the first antenna array and the second antenna array may be adjusted as needed in actual use, which are not limited in the disclosure.

It needs to be noted that, a control circuit is not shown in the diagram of FIG. 4(b), and an implementation principle and an implementation form of the control circuit may refer to the description of other embodiments of the disclosure, which is not limited in the disclosure.

By implementing the embodiments of the disclosure, when the terminal device works in the detection mode and the RF circuit works in the TDD frequency band within the FR2, the sending circuit in the RF circuit may be controlled to connect with one antenna array, and the reflection circuit may be controlled to connect with the other antenna array,. Therefore, the detection function may be achieved by multiplexing the RF circuit in the terminal device, which further enriches the functions of the terminal device without increasing a hardware burden of the terminal device.

Referring to FIG. 5, FIG. 5 is a structural diagram illustrating a terminal device according to an embodiment of the present disclosure.

As illustrated in FIG. 5 (a), an RF circuit (51) in the terminal device may include a sending circuit, a reflection circuit and a receiving circuit, and the antenna unit (52) may include a main antenna and a receiving diversity antenna. A first connection end (1) of a first switch unit (53) is connected to the receiving diversity antenna, a second connection end (2) of the first switch unit (53) is connected to the receiving circuit in the RF circuit, and a third connection end (3) of the first switch unit (53) is connected to the reflection circuit in the RF circuit. The main antenna is connected to the sending circuit in the RF circuit.

It can be seen from FIG. 5(a), in the embodiment of the disclosure, since the RF circuit works in the FDD frequency band within the FR1, different frequency bands need to be adopted for transmission and reception. Therefore, the receiving circuit may not be directly multiplexed, but the receiving diversity antenna in the RF circuit may be multiplexed.

Correspondingly, the control circuit may be specifically configured to control the first connection end (1) of the switch unit (53) to connect with the third connection end (3), in response to determining that the terminal device works in the detection mode and the RF circuit works in the FDD frequency band within the FR1. Thus, the transmission circuit may send the detection signal via the main antenna, and the receiving diversity antenna may input the detection feedback signal to the reflection circuit via the switch unit, that is, the reflection circuit receives the detection feedback signal via the receiving diversity antenna.

Alternatively, the control circuit may be specifically configured to control the first connection end (1) of the first switch unit (53) to connect with the second connection end (2), in response to determining that the terminal device works in the non-detection mode. Thus, the sending circuit may be caused to send the RF signal via the main antenna, and the receiving circuit may be caused to receive the RF signal via the receiving diversity antenna.

It needs to be noted that, a control circuit is not shown in the diagram of FIG. 5(a), and an implementation principle and an implementation form of the control circuit may refer to the description of other embodiments of the disclosure, which is not limited in the disclosure.

Therefore, the detection function may be achieved by multiplexing the sending circuit in the RF circuit in the terminal device and the receiving diversity antenna, which further enriches the functions of the terminal device without increasing a hardware burden of the terminal device.

Further, a circuit diagram may be adjusted as needed in actual use.

For example, in the diagram as shown in FIG. 5(b), since the RF circuit works in the FDD frequency band within the FR1, different frequency bands need to be adopted for transmission and reception. Thus, the reflection circuit may not directly multiplex the receiving circuit in the RF circuit, but may multiplex the receiving diversity antenna in the RF circuit.

The sending circuit may be connected to one end of an amplifier (54), the other end of the amplifier (54) may be connected to a filter unit (55), and the filter unit (55) may be connected to the main antenna. The receiving diversity antenna is connected to a first connection end (1) of a second switch unit (56), a second connection end (2) of the second switch unit (56) is connected to the receiving circuit via a first filter (57), and a third connection end (3) of the second switch unit (56) is connected to a second filter (58), and the second filter (58) is connected to the reflection circuit in the RF circuit via a mixer (59).

It can be seen from FIG. 5(b) that, when the terminal device works in the detection mode and the RF works in the FDD frequency band within the FR1, the sending circuit is connected to the main antenna to send the detection signal, and the first connection end (1) of the second switch unit (56) is connected to the third connection end (3), in which case, a detection feedback signal is entered from the receiving diversity antenna, and processed by the second filter (58) and the mixer (59), and output to the reflection circuit. In this way, reception of the detection feedback signal is achieved.

When the terminal device works in the non-detection mode, RF signal is sent based on the sending circuit and the main antenna. When the RF signal needs to be received, the first connection end (1) of the first switch unit (56) may be connected with the second connection end (2) to receive the RF signal.

The main antenna and the receiving diversity antenna may be adjusted as needed in actual use, which are not limited in the disclosure.

It needs to be noted that, a control circuit is not shown in the diagram of FIG. 5(b), and an implementation principle and an implementation form of the control circuit may refer to the description of other embodiments of the disclosure, which is not limited in the disclosure.

By implementing the embodiment of the disclosure, when the terminal device works in the detection mode and the RF circuit works in the FDD frequency band within the FR1, the reflection circuit may be controlled to be connected to the receiving diversity antenna. Therefore, the detection function may be achieved by multiplexing the RF circuit in the terminal device, which further enriches the functions of the terminal device without increasing a hardware burden of the terminal device.

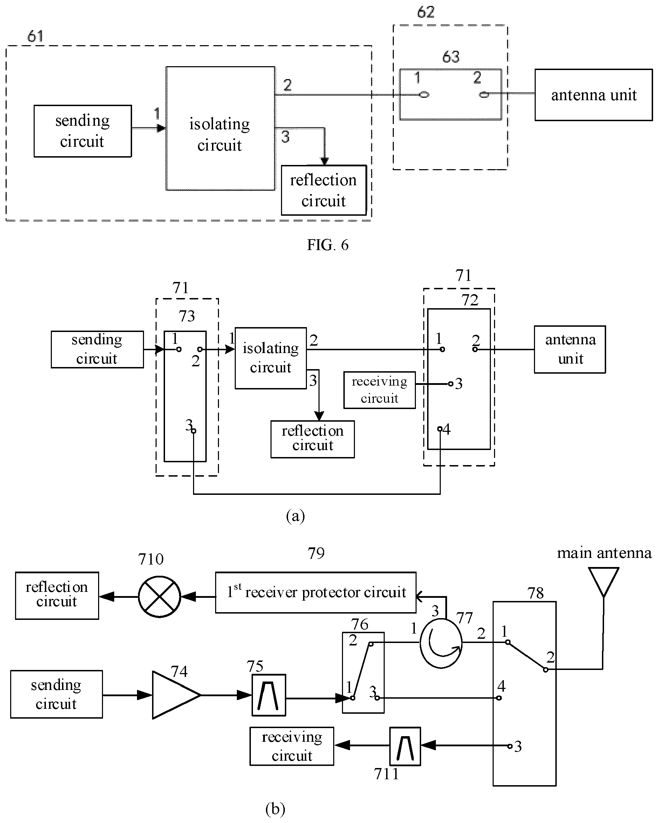

Referring to FIG. 6, FIG. 6 is a structural diagram illustrating a terminal device according to an embodiment of the present disclosure.

As illustrated in FIG. 6, the RF circuit (61) in the terminal device may include a sending circuit, a reflection circuit and an isolating circuit.

In addition, the sending circuit is connected to a first end (1) of the isolating circuit, a second end (2) of the isolating circuit is connected to a first connection end (1) of a first switch (63) in a switch unit (62), and a third end (3) of the isolating circuit is connected to the reflection circuit.

In addition, a second connection end (2) of the first switch (63) in the switch unit (62) is connected to the antenna unit.

It may be understood that, the switch unit (62) may include other switches, which are not limited in the disclosure.

It needs to be noted that, other connection end of the first switch (63) is not shown in the disclosure, and a connection principle of the first switch (63) may refer to the description of other embodiments of the disclosure, which is not limited in the disclosure.

The isolating circuit may be configured to isolate the reflection circuit from a sending signal generated by the sending circuit, and isolate a received detection feedback signal from the sending circuit.

Optionally, the isolating circuit may be a circulator, or may be a hybrid junction, or may be a bidirectional coupler, which is not limited in the present disclosure.

It can be seen from FIG. 6 that in embodiments of the disclosure, the sending circuit and the reflection circuit in the RF circuit adopt the same antenna. In order to avoid a signal interference between the sending circuit and the reflection circuit, the isolating circuit may be added to the RF circuit in the present disclosure.

Correspondingly, the control circuit may be specifically configured to control the first connection end (1) of the first switch (63) to connect with the second connection end (2), in response to determining that the terminal device works in the detection mode.

It can be seen from FIG. 6 that when the terminal device works in the detection mode, the first connection end (1) of the first switch (63) may be connected with the second connection end (2), so that the detection signal generated by the sending circuit may be input via a first end (1) of the isolating circuit, and be output from the second end (2) of the isolating circuit, and be output by the antenna, so as to achieve transmission of the detection signal. When a detection feedback signal is received, the detection feedback signal may first pass through the antenna unit and the first switch (63), may be then input to the isolating circuit via the second end (2) of the isolating circuit, and may be input to the reflection circuit via the third end (3) of the isolating circuit. That is, the reflection circuit receives the detection feedback signal from the third end (3) of the isolating circuit. In this way, the detection function of the terminal device is achieved.

It needs to be noted that, a control circuit is not shown in the diagram of FIG. 6, and an implementation principle and an implementation form of the control circuit may refer to the description of other embodiments of the disclosure, which is not limited in the disclosure.

By implementing the embodiment of the disclosure, when the terminal device works in the detection mode, the isolating circuit may be added, and the first connection end of the first switch may be controlled to connect with the second connection end, so as to send the detection signal and receive the detection feedback signal. Therefore, the detection function may be achieved by multiplexing a part of the RF circuit in the terminal device without increasing a hardware burden of the terminal device, which further enriches the functions of the terminal device.

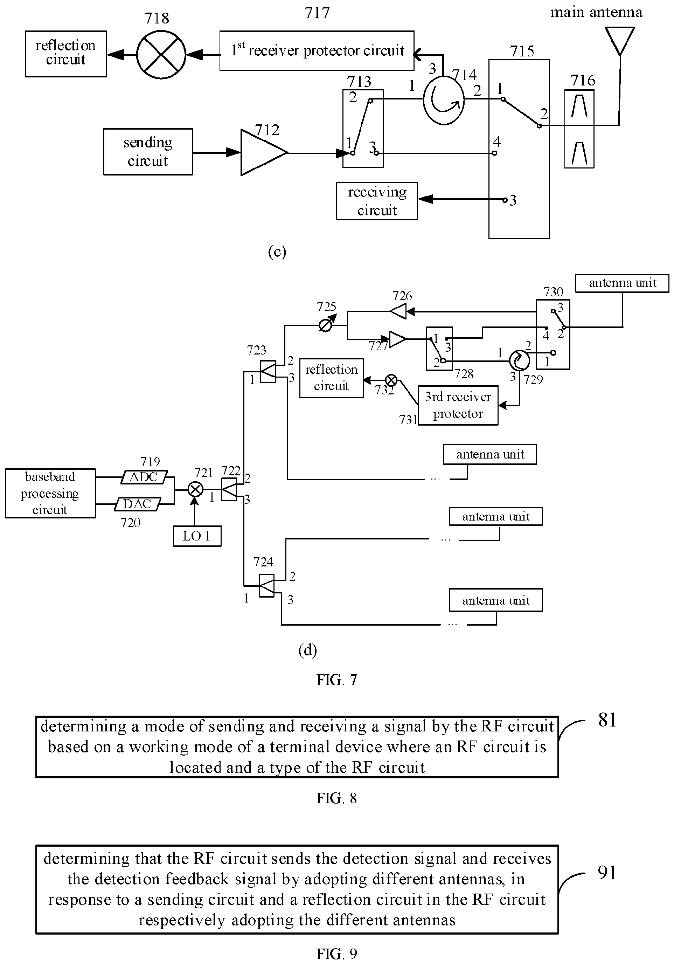

Referring to FIG. 7, FIG. 7 is a structural diagram illustrating a terminal device according to an embodiment of the present disclosure.

As illustrated in FIG. 7(a), the terminal device may include a sending circuit, a reflection circuit, an isolating circuit and a receiving circuit.

In addition, the switch unit (71) may include a first switch (72) and a second switch (73).

A second connection end (2) of the first switch (72) in the switch unit (71) is connected to the antenna unit. A first connection end (1) of the first switch (72) in the switch unit is connected to a second end (2) of the isolating circuit, and a third connection end (3) in the first switch (72) is connected to the receiving circuit, a third connection end (3) of the isolating circuit is connected to the reflection circuit, a first end (1) of the isolating circuit is connected to a second connection end (2) of the second switch (73), the sending circuit is connected to a second connection end (2) of the second switch (73), and the third connection end (3) of the second switch (73) is connected to a fourth connection end (4) of the first switch (72).

It can be seen from FIG. 7(a) that in the embodiment of the present disclosure, in order to avoid a signal interference between the sending circuit and the reflection circuit, an isolating circuit may be added in the present disclosure, and a part of the RF circuit of the terminal device may be multiplexed to achieve the detection function of the terminal device.

Correspondingly, the control circuit is specifically configured to: control the first connection end (1) of the second switch (73) to connect with the second connection end (2) of the second switch (73) and control the second connection end (2) of the first switch (72) to connect with the first connection end (1) of the first circuit (72), in response to determining that the terminal device works in the detection mode and the RF circuit works in the TDD frequency band within the FR1, or the terminal device works in the detection mode and the RF circuit works in the FDD frequency band within the FR1, or the terminal device works in the detection mode and the RF circuit works in the TDD frequency band within the FR2.

It can be seen from FIG. 7(a) that, when the terminal device works in the detection mode and the RF circuit works in the TDD frequency band within the FR1, or the terminal device works in the detection mode and the RF circuit works in the FDD frequency band within the FR1, or the terminal device works in the detection mode and the RF circuit works in the TDD frequency band within the FR2, the first connection end (1) of the second switch (73) may be controlled to connect with the second connection end (2) of the second switch (73), and the second connection end (2) of the first switch (72) may be controlled to connect with the first connection end (1) of the first circuit (72). Thus, the sending circuit is connected to the first end (1) of the isolating circuit via the second switch (73), and passing through the second end (2) of the isolating circuit, the first connection end (1) and the second connection end (2) of the first switch (72), the detection signal is sent by the antenna unit. The detection feedback signal is first input to the isolating circuit via the antenna unit and the first switch (72), from the second end (2) of the isolating circuit, and is output to the reflection circuit via the third end (3) of the isolating circuit. That is, the reflection circuit receives the detection feedback signal from the third end (3) of the isolating circuit. As such, the detection function of the terminal device is achieved.

Alternatively, when the terminal device works in the non-detection mode, the first connection end (1) of the second switch (73) may be controlled to connect with the second connection end (3) of the second switch (73) and the second connection end (2) of the first switch (72) may be controlled to connect with a fourth connection end (4) of the first switch (72). Thus, the sending circuit is connected to the antenna unit via the second switch (73) and the first switch (72), thereby sending the RF signal. When the RF signal is received, the RF signal may be input via the antenna unit, and may reach the receiving circuit via the second connection end (2) and the third connection end (3).

Further, a circuit diagram may be adjusted as needed in actual use.

Optionally, the isolating circuit may be a circulator, or may be a hybrid junction, or may be a bidirectional coupler, which is not limited in the present disclosure.

Alternatively, the RF circuit may further include a receiver protector, so that one end of the receiver protector may be connected to the reflection circuit, and the other end of receiver protector may be connected to the third end of the isolating circuit. In the embodiment of the present disclosure, using the receiver protector may effectively prevent the signal of the sending circuit from blocking the reflection circuit due to insufficient isolation.

It needs to be noted that, a control circuit is not shown in the diagram of FIG. 7(a), and an implementation principle and an implementation form of the control circuit may refer to the description of other embodiments of the disclosure, which is not limited in the disclosure.

For example, in the diagram as shown in FIG. 7(b), the isolating circuit is a circulator. The sending circuit is connected to one end of a first amplifier (74), the other end of the first amplifier (74) is connected to a first filter (75), the other end of the first filter (75) is connected to a first connection end (1) of a fourth switch (76), a second connection end (2) of the fourth switch (76) is connected to a first end (1) of a first circulator (77), and a third connection end (3) of the fourth switch (76) is connected to a fourth connection end (4) of a third switch (78), a second end (2) of the first circulator (77) is connected to a first connection end (1) of the third switch (78), a third end (3) of the first circulator (77) is connected to one end of a first receiver protector (79), and the other end of the first receiver protector (79) is connected to a first mixer (710), and the first mixer (710) is connected to the reflection circuit. A second connection end (2) of the third switch (78) is connected to the main antenna, and a third connection end (3) of the third switch (78) is connected to a second filter (711), and the second filter (711) is connected to a receiving circuit.

It can be seen from FIG. 7(b) that when the terminal device works in the detection mode and the RF circuit works in the TDD frequency band within the FR1, the first connection end (1) of the fourth switch (76) may be connected with a second connection end (2) of the fourth switch (76), and the second connection terminal (2) of the third switch (78) may be connected with the first connection end (1) of the third switch (78). Thus, starting from the sending circuit, passing through the first amplifier (74), the first filter (75) and the fourth switch (76), the detection signal may be input via the first end (1) of the first circulator (77) and output via the second end (2), and sent by the main antenna via the third switch (78). When the detection feedback signal is received, the detection feedback signal may be input to the second end (2) of the first circulator (77) via the main antenna and the third switch (78), may be output via the third end (3) of the first circulator (77), and may be processed by the first receiver protector (79) and a first mixer (710), to reach the reflection circuit. In this way, the reception of the detection feedback signal is achieved.

Alternatively, when the terminal device works in the non-detection mode, the first connection end (1) of the fourth switch (76) may be controlled to connect with the third connection end (3) of the fourth switch (76), and the second connection end (2) of the third switch (78) may be controlled to connect with a fourth connection end (4) of the third switch (78). Thus, starting from the sending circuit, passing through the first amplifier (74), the first filter (75) and the fourth switch (76), the RF signal may be input via the third end (3) of the first circulator (77) and output via the fourth end (4), and sent by the main antenna via the third switch (78). When the RF signal is received, the RF signal may be input via the main antenna, may be processed via the second connection end (2) and the third connection end (3) of the third switch (78) and the second filter (711), may be input to the receiving circuit. In this way, the reception of the RF signal is received.

It needs to be noted that, a control circuit is not shown in the diagram of FIG. 7(b), and an implementation principle and an implementation form of the control circuit may refer to the description of other embodiments of the disclosure, which is not limited in the disclosure.

Alternatively, a diagram of the terminal device in actual implementation may be illustrated in FIG. 7(c).

In the diagram as illustrated in FIG. 7(c), the isolating circuit is a circulator. The sending circuit is connected to one end of a second amplifier (712), the other end of the second amplifier (712) is connected to a first connection end (1) of a sixth switch (713), a second connection end (2) of the sixth switch (713) is connected to a first end (1) of a second circulator (714), and a third connection end (3) of the sixth switch (713) is connected to a third connection end (4) of a fifth switch (715), a second end (2) of a second circulator (714) is connected to a first connection end (1) of the fifth switch (715), a third end (3) of the second circulator (714) is connected to one end of a second receiver protector (717), and the other end of the second receiver protector (717) is connected to a second mixer (718), and the second mixer (718) is connected to the reflection circuit. A second connection end (2) of the fifth switch (715) is connected to a filter unit (716), the filter unit (716) is connected to a main antenna, and the filter unit (716) may be further connected to the receiving circuit.

It can be seen from FIG. 7(c) that, when the terminal device works in the detection mode and the RF circuit works in the FDD frequency band within the FR1, the first connection end (1) of the sixth switch (713) may be connected to the second connection end (2) of the sixth switch (713), and the second connection end (2) of the fifth switch (715) is connected to the first connection end (1) of the fifth switch (715). Thus, starting from the sending circuit, passing through the first amplifier (712) and the sixth switch (713), the detection signal may be input via the first end (1) of the second circulator (714) and output via the second end (2), and may be sent by the antenna unit via the fifth switch (715) and the filter unit (716). When the detection feedback signal is received, the feedback detection signal may be input to the second end (2) of the second circulator (714) via the antenna unit, the filter unit (716) and the fifth switch (715) and output via the third end (3) of the first circulator (714), may be processed via the second receiver protector (717) and the second mixer (718), to reach the reflection circuit. In this way, the reception of the detection feedback signal is achieved.

Alternatively, when the terminal device works in the non-detection mode, the first connection end (1) of the sixth switch (713) may be controlled to connect with the third connection end (3) of the sixth switch (713) and the second connection end (2) of the fifth switch (715) is controlled to connect with a fourth connection end (4) of the fifth switch (715). Thus, starting from the sending circuit, passing through the second amplifier (712) and the sixth switch (713), the RF signal may be input via the third end (3) of the second circulator (714) and output via the fourth end (4), and may be sent by the antenna unit via the fifth switch (715) and the filter unit (716). When the RF signal is received, the RF signal may be input via the antenna unit, and input to the receiving circuit via the filter unit (716). In this way, the reception of the RF signal is achieved.

It needs to be noted that, a control circuit is not shown in the diagram of FIG. 7(c), and an implementation principle and an implementation form of the control circuit may refer to the description of other embodiments of the disclosure, which is not limited in the disclosure.

Alternatively, a diagram of the terminal device in actual implementation may be illustrated in FIG. 7(d).

In the diagram as illustrated in FIG. 7(d), the isolating circuit is a circulator. The baseband processing circuit may be connected to an ADC (719) and a DAC (720) respectively, the ADC (719) and the DAC (720) are respectively connected to a third mixer (721), the third mixer (721) is connected to a connection end (1) of a first power divider (722), a connection end (2) of the first power divider (722) is connected to a connection end (1) of a second power divider (723), a connection end (3) of the first power divider (722) is connected to a connection end (1) of a third power divider (724), and a connection end (2) of the second power divider (723) is connected to a first phase shifter (725) , the first phase shifter (725) is connected to a third amplifier (726) and a fourth amplifier (727) respectively, one end of the fourth amplifier (727) is connected to a first connection end (1) of an eighth switch (728), a second connection end (2) of the eighth switch (728) is connected to a first end (1) of a third circulator (729), a third connection end (3) of the eighth switch (728) is connected to a fourth connection end (4) of a seventh switch (730), a connection end (2) of a third circulator (729) is connected to a first connection end (1) of the seventh switch (730), a connection end (3) of the third circulator (729) is connected to one end of a third receiver protector (731), and the other end of the third receiver protector (731) is connected to a fourth mixer (732), and the fourth mixer (732) is connected to the reflection circuit. A second connection end (2) of the seventh switch (730) is connected to the antenna unit, and the third connection end (3) of the seventh switch (730) is connected to the other end of the third amplifier (726).

In addition, the subsequent connection circuit of the connection end (3) of the second power divider (723) is the same as the subsequent connection circuit of the connection end (2) of the second power divider (723). Correspondingly, the subsequent connection circuits of the connection end (2) and the connection end (3) of the third power divider (724) are the same as the subsequent connection circuits of the connection end (2) and the connection end (3) of the second power divider (723), which will not be repeated here.

It can be seen from FIG. 7(d) that, when the terminal device works in the detection mode and the RF circuit works in the TDD frequency band within the FR2, the first connection end (1) of the eighth switch (728) may be connected to the second connection end (2) of the eighth switch (728), and the second connection end (2) of the seventh switch (730) is connected to the first connection end (1) of the seventh switch (730). Therefore, the detection signal may be processed via the baseband processing circuit, the ADC, and the DAC, may be processed with a local oscillator signal (Lo 1) via the third mixer (721), may be processed via the first power divider (722), the second power divider (723), and the first phase shifter (725), passing through the fourth amplifier (727) connected to the first connection end (1) of the eighth switch (728), may be input via the second connection end (2) of the eighth switch (728) to the connection end (1) of the third circulator (729), and may be output by the antenna unit connected to the seventh switch (730) via the connection end (2) of the third circulator (729). When the detection feedback signal is received, the detection feedback signal may be input via the antenna unit, and the second connection end (2) and the first connection end (1) of the seventh switch (730) to the second end (2) of the first circulator (729), and may be output via the third end (3) of the third circulator (729), and may be processed via the third receiver protector (731) and the fourth mixer (732), to reach the reflection circuit. In this way, the reception of the detection feedback signal is achieved.

Alternatively, when the terminal device works in the non-detection mode, the first connection end (1) of the eighth switch (728) may be controlled to connect with the third connection end (3) of the second switch (728) and the second connection end (2) of the seventh switch (730) may be controlled to connect with the fourth connection end (4) of the seventh switch (730). Therefore, when the RF signal needs to be sent, the RF signal may be processed via the baseband processing circuit, the ADC (719) and the DAC (720), after adding a local oscillator signal (Lo 1) to the third mixer (721), the signal may be processed via the first power divider (722), the second power divider (723) and the first phase shifter (725), after passing through the fourth amplifier (727) connected to the first connection end (1) of the eighth switch (728) via, the signal may be input to the fourth connection end (4) of the seventh switch (730) via the third connection end (3) of the eighth switch (728), and may be sent by the antenna unit via the second connection end (2) of the seventh switch (730). When the RF signal needs to be received, the second connection end (2) of the seventh switch (730) may be connected to the third connection end (3), the signal may be processed via the third amplifier (726) and input to the first phase shifter (725), and may be processed via the second power divider (723), the first power divider (722), the third mixer (721), the ADC (719), the DAC (720) and the baseband processing circuit, so that the RF signal may be received.

It needs to be noted that, a control circuit is not shown in the diagram of FIG. 7(d), and an implementation principle and an implementation form of the control circuit may refer to the description of other embodiments of the disclosure, which is not limited in the disclosure.

By implementing the embodiment of the disclosure, when the terminal device works in the detection mode, the isolating circuit may be added, and connection states of connection ends in the first switch and the second switch may be controlled to send the detection signal and receive the detection feedback signal. Therefore, the detection function may be achieved by multiplexing a part of the RF circuit in the terminal device without increasing a hardware burden of the terminal device, which further enriches the functions of the terminal device.

Referring to FIG. 8, FIG. 8 is a flowchart illustrating a method for controlling an RF circuit according to an embodiment of the present disclosure. As illustrated in FIG. 8, the method may include but not limited to the following steps.

At step 81, a mode of sending and receiving a signal by the RF circuit may be determined based on a working mode of the terminal device where an RF circuit is located and a type of the RF circuit.

There may be a variety of working modes of the terminal device where the RF circuit is located. For example, the working mode may be a detection mode or a non-detection mode, which is not limited in the disclosure.

In addition, there may be a variety of types of RF circuits. For example, a sending circuit and a reflection circuit in the RF circuit may respectively adopt different antennas, or may adopt the same antenna, which are not limited in the disclosure.

It may be understood that, when the terminal device where the RF circuit is located is in a different working mode, the mode of sending and receiving a signal by the RF circuit may be determined based on the type of the RF circuit.

Optionally, the RF circuit may be controlled to send a detection signal and receive a detection feedback signal, so that the terminal device achieves the detection function by using the RF circuit. Alternatively, the RF circuit may be controlled to send an RF signal and receive the RF signal, so that the terminal device achieves the non-detection function by using the RF circuit. Therefore, the detection function may be achieved by multiplexing the RF circuit in the terminal device, which further enriches the functions of the terminal device without increasing a hardware burden of the terminal device.

Optionally, when the terminal device works in the detection mode, a mode of sending a detection signal and receiving a detection feedback signal by the RF circuit may be determined based on the type of the RF circuit.

For example, when the terminal device where the RF circuit is located works in the detection mode and the sending circuit and the reflection circuit in the RF circuit respectively adopt the different antennas, it may be determined that the RF circuit sends the detection signal and receives the detection feedback signal by adopting different antennas.

Alternatively, when the terminal device where the RF circuit is located works in the detection mode and the sending circuit and the reflection circuit in the RF circuit adopt the same antenna, it may be determined that the RF circuit sends the detection signal and receives the detection feedback signal by adopting the same antenna.

It should be noted that the above examples are illustrated only and are not intended to be a limitation of the mode of sending the detection signal and receiving the detection feedback signal by the RF circuit in the embodiments of the present disclosure.

By implementing the embodiment of the disclosure, the mode of sending and receiving the signal may be determined based on the working mode of the terminal device where the RF circuit is located and the type of the RF circuit. Therefore, the detection function may be achieved by multiplexing the RF circuit in the terminal device, which further enriches the functions of the terminal device without increasing a hardware burden of the terminal device.

Referring to FIG. 9, FIG. 9 is a flowchart illustrating a method for controlling an RF circuit according to an embodiment of the present disclosure. As illustrated in FIG. 9, the method may include but not limited to the following steps.

At step 91, it is determined that the RF circuit sends the detection signal and receives the detection feedback signal by adopting different antennas, in response to the sending circuit and the reflection circuit in the RF circuit respectively adopting the different antennas.

There may be a variety of antennas, for example, there may be a main antenna, and a receiving diversity antenna, which are not limited in the disclosure.

The method for controlling the RF circuit according to the disclosure is applicable to a terminal device in any embodiment of the disclosure. The specific structure of the RF circuit in the method for controlling the RF circuit according to the disclosure may refer to a structural diagram of the terminal device in any embodiment of the present disclosure, which is not limited in the disclosure.

Optionally, when the RF circuit works in the TDD frequency band within the FR1, since the sending circuit and the reflection circuit in the RF circuit in the terminal device respectively adopt different antennas, it may be determined that the sending circuit is connected to the main antenna to send the detection signal, and the reflection circuit is connected to the receiving diversity antenna to receive the detection feedback signal.

It may be understood that, since the sending circuit and the reflection circuit in the RF circuit are respectively connected to different antennas, when the RF circuit works in the TDD frequency band within the FR1, there may be no signal interference between the sending circuit and the reflection circuit. Therefore, the detection function may be achieved by directly multiplexing the sending circuit and the reflection circuit in the RF circuit. That is, the reflection circuit in the embodiments of the disclosure is a multiplexed receiving circuit in the RF circuit.

For example, in the diagram as illustrated in FIG. 3, when the terminal device is in the detection mode and the RF circuit works in the TDD frequency band within the FR1, the transmission circuit may be connected to the main antenna to send the detection signal, and the reflection circuit may be connected to the receiving diversity antenna to send the detection feedback signal.

In the embodiments of the disclosure, if the sending circuit and the reflection circuit in the RF circuit in the terminal device adopt different antennas, when the terminal device works in the detection mode and the RF circuit works in the TDD frequency band within the FR1, the sending circuit in the RF circuit may be controlled to connect with the main antenna to send the detection signal, and the reflection circuit in the RF circuit may be controlled to connect with the receiving diversity antenna to receive the detection feedback signal. Therefore, the detection function may be achieved by multiplexing the RF circuit in the terminal device, which further enriches the functions of the terminal device without increasing a hardware burden of the terminal device.

It should be noted that if the terminal device includes a plurality of antenna arrays, for example, the terminal device includes two antenna arrays, correspondingly, the RF circuit may include two RF sub-circuits, and each of the two RF sub-circuits may include a sending circuit and a reflection circuit. When the RF circuit works in the TDD frequency band within the FR2, it is determined that the sending circuit in one of the two RF sub-circuits is connected to a corresponding antenna array to send the detection signal, and the reflection circuit in the other of the two RF sub-circuits is connected to a corresponding antenna array to receive the detection feedback signal.

For example, in the diagram as illustrated in FIG. 4(a), when the terminal device works in the detection mode and the RF circuit works in the TDD frequency band within the FR2, the first connection end (1) of the first switch (46) may be controlled to connect with the second connection end (2) and the first connection end (1) of the second switch (47) may be controlled to connect with the third connection end (3). That is, the sending circuit in one of the two RF sub-circuits is connected to the first antenna array (44) via the first switch (46) to send the detection signal; and the reflection circuit in the other of the two RF sub-circuits is connected to the second antenna array (45) via the second switch (47) to receive the detection feedback signal.

In embodiments of the disclosure, if the terminal device includes a plurality of antenna arrays, when the terminal device works in the detection mode and the RF circuit works in the TDD frequency band within the FR2, the terminal device may control the sending circuit in the RF circuit to connect with one antenna array, and control the reflection circuit to connect with the other antenna array. Therefore, the detection function may be achieved by multiplexing the RF circuit in the terminal device, which further enriches the functions of the terminal device without increasing a hardware burden of the terminal device.

Optionally when the RF circuit works in the FDD frequency band within the FR1, it is determined that the sending circuit in the RF circuit is connected to the main antenna to send the detection signal, and the receiving diversity antenna in the RF circuit is connected to the reflection circuit to receive the detection feedback signal,.

For example, in the diagram as shown in FIG. 5, since the RF circuit works in the FDD frequency band within the FR1, different frequency bands need to be adopted for transmission and reception. Thus, the reflection circuit may not directly multiplex the communicated RF circuit, but may multiplex the receiving diversity antenna in the RF circuit.

Thus, when the terminal device works in the detection mode and the RF circuit works in the FDD frequency band within the FR1, the sending circuit may be connected to the main antenna to send the detection signal, and the first connection end (1) of the first switch unit (53) may be connected to the third connection end (3), that is, the receiving diversity antenna is connected to the reflection circuit, to receive the detection feedback signal.

When the terminal device works in the non-detection mode, the sending circuit may be connected to the main antenna to send an RF signal. When the RF signal needs to be received, the first connection end (1) of the first switch unit (53) may be connected with the second connection end (2) to receive the RF signal.

In the embodiments of the disclosure, if the sending circuit and the reflection circuit in the terminal device are respectively connected to different antennas, when the terminal device works in the detection mode and the RF circuit works in the FDD frequency band within the FR1, the reflection circuit may be controlled to connect with the receiving diversity antenna. Therefore, the detection function may be achieved by multiplexing the RF circuit in the terminal device, which further enriches the functions of the terminal device without increasing a hardware burden of the terminal device.

By implementing the embodiments of the disclosure, when the terminal device works in the detection mode and the sending circuit and the reflection circuit in the RF circuit respectively adopts different antennas, it may be determined that the RF circuit sends the detection signal and receives the detection feedback signal by adopting different antennas,. Therefore, the detection function may be achieved by multiplexing the RF circuit in the terminal device, which further enriches the functions of the terminal device without increasing a hardware burden of the terminal device.

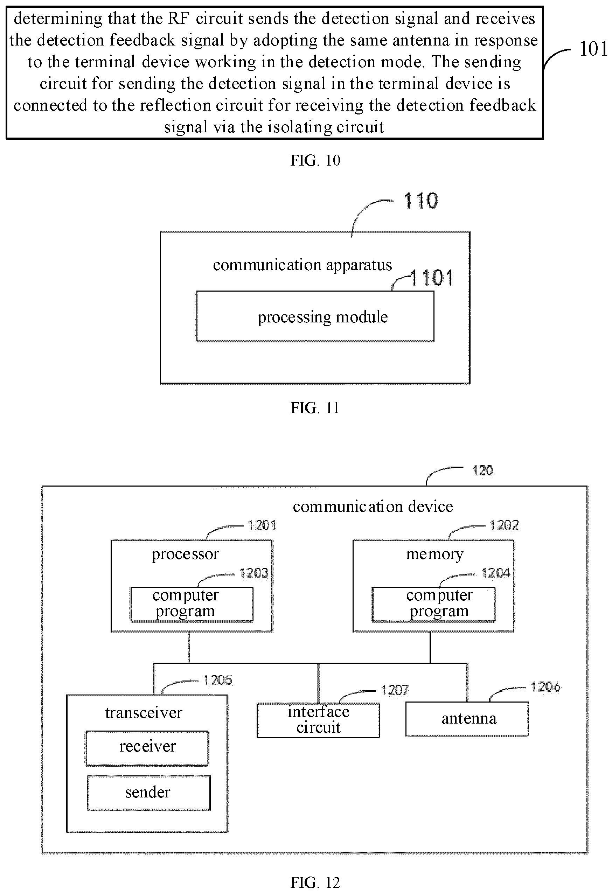

Referring to FIG. 10, FIG. 10 is a flowchart illustrating a method for controlling an RF circuit according to an embodiment of the present disclosure. As illustrated in FIG. 10, the method may include but not limited to the following steps.

At step 101, it is determined that the RF circuit sends the detection signal and receives the detection feedback signal by adopting the same antenna in response to the terminal device working in the detection mode. The sending circuit for sending the detection signal in the terminal device is connected to the reflection circuit for receiving the detection feedback signal via the isolating circuit.

Optionally, the isolating circuit may be a circulator, or may be a hybrid junction, or may be a bidirectional coupler, which is not limited in the present disclosure.

The method for controlling the RF circuit according to the disclosure is applicable to a terminal device in any embodiment of the disclosure. The specific structure of the RF circuit in the method for controlling the RF circuit according to the disclosure may refer to a structural diagram of the terminal device in any embodiment of the present disclosure, which is not limited in the disclosure.

Optionally, when the terminal device is in the detection mode, and the RF circuit works in the TDD frequency band within the FR1, since the sending circuit and the reflection circuit in the RF circuit in the terminal device adopt the same antenna, for example, adopt the main antenna, it may be determined that the sending circuit in the RF circuit is connected to the main antenna via the isolating circuit to send the detection signal, and the reflection circuit in the RF circuit is connected to the main antenna via the isolating circuit to receive the detection feedback signal.

The isolating circuit is configured to isolate the reflection circuit from a sending signal generated by the sending circuit, and isolate the detection feedback signal received from the main antenna from the sending circuit.

It may be understood that, since the sending circuit and the reflection circuit in the RF circuit are connected to the same antenna, when the RF circuit works in the TDD frequency band within the FR1, there may be a signal interference between the sending circuit and the reflection circuit. Therefore, the isolating circuit may be added in the RF circuit, thereby multiplexing a part of the RF circuit to achieve the detection function.

Optionally, in the diagram as illustrated in FIG. 7(b), the RF circuit sends the detection signal and receives the detection feedback signal by adopting the same antenna.

When the terminal device works in the detection mode and the RF circuit works in the TDD frequency band within the FR1, the first connection end (1) of the fourth switch (76) may be connected to the second connection end (2) of the fourth switch (76), and the second connection end (2) of the third switch (78) is connected to the first connection end (1) of the third switch (78). That is, the sending circuit in the RF circuit is connected to the main antenna via the first circulator (77) to send the detection signal, and the reflection circuit in the RF circuit is connected to the main antenna via the first circulator (77) to receive the detection feedback signal.

Alternatively, when the terminal device works in the non-detection mode, the first connection end (1) of the fourth switch (76) may be controlled to connect with the third connection end (3) of the fourth switch (76) and the second connection end (2) of the third switch (78) is controlled to connect with the fourth connection end (4) of the third switch (78). That is, the sending circuit in the RF circuit is connected to the main antenna via the fourth switch (76) and the third switch (78), thereby sending the RF signal. When the RF signal is received, the second connection end (2) of the first switch is switched to connect with the third connection end (3), and is connected to the receiving circuit via the second filter (711), thereby receiving the RF signal.

In the embodiments of the disclosure, if the sending circuit and the reflection circuit in the RF circuit in the terminal device adopt the same antenna, when the terminal device works in the detection mode and the RF circuit works in the TDD frequency band within the FR1, the sending circuit in the RF circuit may be connected to the main antenna via the circulator to send the detection signal, and the reflection circuit in the RF circuit may be connected to the main antenna via the circulator to receive the detection feedback signal, by adjusting connection states of connection ends in the first switch and the second switch. Therefore, part of the RF circuit in the terminal device may be multiplexed to achieve the detection function, without increasing any pressure on the hardware burden of the terminal device, which further enriches the functions of the terminal device.

Optionally, when the terminal device is in the detection mode, and the RF circuit works in the FDD frequency band within the FR1, since the sending circuit and the reflection circuit in the RF circuit in the terminal device adopt the same antenna, the sending circuit in the RF circuit may be connected to the main antenna via the isolating circuit to send the detection signal, and the reflection circuit in the RF circuit may be connected to the main antenna via the isolating circuit to receive the detection feedback signal.

The isolating circuit is configured to isolate the reflection circuit from the sending signal generated by the sending circuit, and isolate the detection feedback signal received from the main antenna from the sending circuit.

It may be understood that, since the sending circuit and the reflection circuit in the RF circuit are connected to the same antenna, when the RF circuit works in the FDD frequency band within the FR1, there may be a signal interference between the sending circuit and the reflection circuit. Therefore, the isolating circuit may be added in the RF circuit, thereby multiplexing a part of the RF circuit to achieve the detection function.

Optionally, in the diagram as illustrated in FIG. 7(c), the isolating circuit is a circulator, and the RF circuit sends the detection signal or receives the detection feedback signal by adopting the same antenna.

When the terminal device works in the detection mode and the RF circuit works in the FDD frequency band within the FR1, the first connection end (1) of the sixth switch (713) may be connected to the second connection end (2) of the sixth switch (713), and the second connection end (2) of the fifth switch (715) is connected to the first connection end (1) of the fifth switch (715). That is, the sending circuit is connected to the main antenna via the sixth switch (713), the second circulator (714) and the fifth switch (715), and the reflection circuit receives the detection feedback signal through the fifth switch (715) and the second circulator (714).

Alternatively, when the terminal device works in the non-detection mode, the first connection end (1) of the sixth switch (713) may be controlled to connect with the third connection end (3) of the sixth switch (713) and the second connection end (2) of the fifth switch (715) may be controlled to connect with the fourth connection end (4) of the fifth switch (715). That is, the sending circuit in the RF circuit is connected to the main antenna via the sixth switch (713), the fifth switch (715) and a filter unit (716), thereby sending the RF signal. When the RF signal is received, the second connection end (2) of the fifth switch (715) is switched to connect with the third connection end (3), and the receiving circuit is connected to the main antenna via the filter unit (716), thereby receiving the RF signal.

In the embodiments of the disclosure, if the sending circuit and the reflection circuit in the RF circuit in the terminal device adopt the same antenna, when the terminal device works in the detection mode and the RF circuit works in the FDD frequency band within the FR1, the sending circuit in the RF circuit may be connected to the main antenna via the circulator to send the detection signal, and the reflection circuit in the RF circuit may be connected to the main antenna via the circulator to receive the detection feedback signal, by adjusting connection states of connection ends in the first switch and the second switch. Therefore, a part of the RF circuit in the terminal device may be multiplexed to achieve the detection function, without increasing any pressure on the hardware burden of the terminal device, which further enriches the functions of the terminal device.

Optionally, when the terminal device is in the detection mode, and the RF circuit works in the TDD frequency band within the FR2, since the sending circuit and the reflection circuit in the RF circuit in the terminal device adopt the same antenna, the sending circuit in the RF circuit may be connected to the antenna unit via the isolating circuit to send the detection signal, and the reflection circuit in the RF circuit may be connected to the antenna unit via the isolating circuit to receive the detection feedback signal.

It may be understood that, since the sending circuit and the reflection circuit in the terminal device are connected to the same antenna, when the RF circuit works in the TDD frequency band within the FR2, there may be a signal interference between the sending circuit and the reflection circuit. Therefore, the isolating circuit may be added in the RF circuit, thereby multiplexing a part of the RF circuit to achieve the detection function.

Optionally, in the diagram as illustrated in FIG. 7(a), the RF circuit sends the detection signal or receives the detection feedback signal by adopting the same antenna. When the terminal device works in the detection mode and the RF circuit works in the TDD frequency band within the FR2, the first connection end (1) of the second switch (73) may be connected with the second connection end (2) of the second switch (73), and the second connection end (2) of the first switch (72) may be controlled to connect with the first connection end (1) of the first switch (72). That is, the sending circuit is connected with the antenna unit via the second switch (73), the isolating circuit and the first switch (72), thereby sending the detection signal. When the detection feedback signal is received, the detection feedback signal is input via the antenna unit and the first switch (72) to the isolating circuit at the second end (2) of the isolating circuit, and output to the reflection circuit via the third end (3) of the isolating circuit, that is, the reflection circuit receives the detection feedback signal from the third end (3) of the isolating circuit. In this way, the detection function of the terminal device is achieved.

In the embodiments of the disclosure, if the sending circuit and the reflection circuit in the RF circuit in the terminal device adopt the same antenna, when the terminal device works in the detection mode and the RF circuit works in the TDD frequency band within the FR2, the sending circuit in the RF circuit may be connected to the main antenna via the circulator to send the detection signal, and the reflection circuit in the RF circuit may be connected to the main antenna via the circulator to receive the detection feedback signal, by adjusting connection states of connection ends in the first switch and the second switch. Therefore, a part of the RF circuit in the terminal device may be multiplexed to achieve the detection function, without causing any pressure on the hardware burden of the terminal device, which further enriches the functions of the terminal device. By implementing the embodiments of the disclosure, it may be determined that the RF circuit sends the detection signal and receives the detection feedback signal by adopting the same antenna when the terminal device works in the detection mode. The sending circuit for sending the detection signal in the terminal device is connected to the reflection circuit for receiving the detection feedback signal via the isolating circuit. Therefore, a part of the RF circuit in the terminal device may be multiplexed to achieve the detection function, without increasing any pressure on the hardware burden of the terminal device, which further enriches the functions of the terminal device. In the embodiments provided in the disclosure, methods according to the embodiments of the present disclosure are introduced mainly from the perspective of the terminal device. To achieve various functions in the methods according to the embodiments of the disclosure, the terminal device may include a hardware structure and a software module, to achieve the above functions in the form of the hardware structure, or the software module, or a combination of the hardware structure and the software module. The certain function in the above functions may be performed by the hardware structure, or the software module, or a combination of the hardware structure and the software module.

Referring to FIG. 11, FIG. 11 is a structural diagram illustrating a communication apparatus 110 according to an embodiment of the present disclosure. The communication apparatus 110 as illustrated in FIG. 11 may include a processing module 1101.

It may be understood that the communication apparatus 110 may be a terminal device, an apparatus of the terminal device, or an apparatus capable of being matched and used with the terminal device.

The communication apparatus 110 includes a processing module 1101.

The processing module 1101 is configured to determine a mode of sending and receiving a signal by the RF circuit, based on a working mode of a terminal device where the RF circuit is located and a type of the RF circuit.

Optionally, the processing module 1101 is specifically configured to: determine a mode of sending a detection signal and receiving a detection feedback signal by the RF circuit, based on the type of the RF circuit, in response to the terminal device working in a detection mode.

Optionally, the processing module 1101 is further specifically configured to: determine that the RF circuit sends the detection signal and receives the detection feedback signal by adopting different antennas, in response to a sending circuit and a reflection circuit in the RF circuit respectively adopting the different antennas.

Optionally, the processing module 1101 is further specifically configured to: determine that the sending circuit is connected to a main antenna to send the detection signal, and the reflection circuit is connected to a receiving diversity antenna to receive the detection feedback signal, in response to the RF circuit working in a TDD frequency band within an FR1.

Optionally, the RF circuit includes two RF sub-circuits, and each of the two RF sub-circuits includes a sending circuit and a reflection circuit. The processing module 1101 is further specifically configured to: determine that a sending circuit in one of the two RF sub-circuits is connected to a corresponding antenna array to send the detection signal, and a reflection circuit in the other of the two RF sub-circuits is connected to a corresponding antenna array to receive the detection feedback signal, in response to the RF circuit working in a TDD frequency band within an FR2.

Optionally, the processing module 1101 is further specifically configured to: determine that the sending circuit in the RF circuit is connected to a main antenna to send the detection signal, and a receiving diversity antenna in the RF circuit is connected to the reflection circuit to receive the detection feedback signal, in response to the RF circuit working in an FDD frequency band within an FR1.

Optionally, the processing module 1101 is further specifically configured to: determine that the RF circuit sends the detection signal and receives the detection feedback signal by adopting a same antenna. The sending circuit for sending the detection signal in the terminal device is connected to the reflection circuit for receiving the detection feedback signal via an isolating circuit.

Optionally, the processing module 1101 is further specifically configured to: determine that the sending circuit in the RF circuit is connected to a main antenna via the isolating circuit to send the detection signal, and the reflection circuit in the RF circuit is connected to the main antenna via the isolating circuit to receive the detection feedback signal, in response to the RF circuit working in a TDD frequency band within an FR1 or working in an FDD frequency band within the FR1. The isolating circuit is configured to isolate the reflection circuit from a sending signal generated by the sending circuit, and isolate the detection feedback signal received from the main antenna from the sending circuit.

Optionally, the processing module 1101 is further specifically configured to: determine that the sending circuit in the RF circuit is connected to an antenna unit via the isolating circuit to send the detection signal, and the reflection circuit in the RF circuit is connected to the antenna unit via the isolating unit to receive the detection feedback signal, in response to the RF circuit working in a TDD frequency band within an FR2.

The communication apparatus in the disclosure, may determine the mode of sending and receiving the signal by the RF circuit based on the working mode of the terminal device where the RF circuit is located and the type of the RF circuit. Therefore, the detection function may be achieved by multiplexing the RF circuit in the terminal device, which further enriches the functions of the terminal device without increasing a hardware burden of the terminal device.

Referring to FIG. 12, FIG. 12 is a structural diagram illustrating another communication device 120 according to an embodiment of the present disclosure. The communication device 120 may be a terminal device, or may be a chip, a system on chip or a processor that supports the terminal device to implement the method. The device may be configured to implement the method described in the method embodiments, and may refer to the descriptions in the method embodiments.

The communication device 120 may include one or more processors 1201. The processor 1201 may include a general purpose processor or a dedicated processor. For example, the processor 141 may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Optionally, the communication device 120 may further include one or more memories 1202 stored with a computer program 1204 . The processor 1201 executes the computer program 1204 so that the communication device 140 is caused to perform the method as described in the above method embodiments. Optionally, the memory 1202 may further store data. The communication device 120 and the memory 1202 may be independently configured or integrated together.

Optionally, the communication device 120 may further include a transceiver 1205 and an antenna 1206. The transceiver 1205 may be referred to as a transceiving unit, a transceiver or a transceiving circuit, which may be configured to achieve a transceving function. The transceiver 1205 may include a receiver and a sender. The receiver may be referred to as a receiver or a receiving circuit, etc., for implementing a receiving function; the sender may be referred to as a sender or a transmission circuit, etc. for implementing a transmission function.

Optionally, the communication device 120 may further include one or more interface circuits 1207. The interface circuit 1207 is configured to receive code instructions and send the code instructions to the processor 1201. The processor 1201 runs the code instructions so that the communication device 120 performs the method as described in the above method embodiment.

The communication device 120 is a terminal device, and the processor 1201 is configured to execute step 81 in FIG. 8, step 91 in FIG. 9, or step 101 in in FIG. 10.

In an implementation, the processor 1201 may include a transceiver configured to implement receiving and sending functions. For example, the transceiver may be a transceiving circuit, or an interface, or an interface circuit. The transceiving circuit, the interface or the interface circuit for implementing receiving and sending functions may be separate or integrated together. The transceiving circuit, the interface or the interface circuit may be configured to read and write codes/data, or the transceiving circuit, the interface or the interface circuit may be configured to send or deliver a signal.

In an implementation, the processor 1201 may be stored with a computer program 1203. The computer program 1203 is running on the processor 1201 so that the communication device 120 performs the method as described in the above method embodiments. The computer program 1203 may be solidified in the processor 1201, in which case the processor 1201 may be implemented by a hardware.

In an implementation, the communication device 120 may include a circuit that may implement a sending or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a terminal device, but the scope of the communication device described in the present disclosure is not limited thereto, and the structure of the communication device may not be subject to FIG. 12. The communication device may be a stand-alone device or may be a part of a larger device. For example, the communication device may be:
(1) a stand-alone integrated circuit (IC), or a chip, or a system on chip or a subsystem;
(2) a set having one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

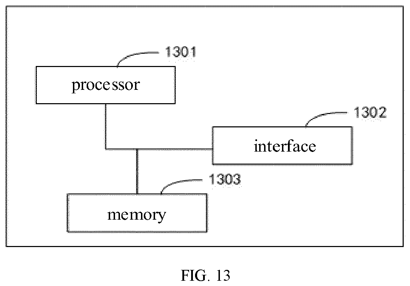

In the case that the communication device may be a chip or a system on chip, please refer to a structural diagram of a chip as illustrated in FIG. 13. The chip illustrated in FIG. 13 may include a processor 1301 and an interface 1302. There may be one or more processors 1301, and there may be a plurality of interfaces 1302.

Optionally, the chip further includes a memory 1303. The memory 1303 is configured to save a necessary computer program and data.

Those skilled in the related art may understand that, various illustrative logical blocks and steps listed in embodiments of the present disclosure, may be implemented by an electronic hardware, a computer software or a combination of the electronic hardware and the computer software. Whether the function is implemented by the hardware or the software depends on specific applications and design needs for an overall system. Those skilled in the art may implement the functions by using various methods for each specific application, but such an implementation should not be understood as beyond the protection scope of the embodiments of the present disclosure.

A system for controlling an RF circuit is further provided in embodiments of the disclosure. The system includes a communication apparatus serving as a terminal device in the embodiment of FIG. 11, or the system includes a communication device serving as a terminal device in the embodiment of FIG. 12.

A computer-readable storage medium stored with instructions is further provided in the disclosure. When the instructions are executed, the functions of the any one method embodiment are implemented.

A computer program product is further provided. The computer program product implements the functions of the above any one method embodiment when executed by a processor.

In the above embodiments, the functions may be wholly or partially implemented by a software, a hardware, a firmware, or any combination of them. When implemented by the software, the functions may be implemented in whole or in part in the form of a computer program product. The computer program product includes one or more computer programs. All or a part of procedures or functions according to the embodiments of the present disclosure are generated when the computer program is loaded and executed on the computer. The computer may be a general purpose computer, a special purpose computer, a computer network, or other programmable device. The computer program may be stored in a computer-readable storage medium or sent from one computer-readable storage medium to another computer-readable storage medium. For example, the computer program may be sent from one website, computer, server, or data center to another, via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In the embodiments of the present disclosure, for a kind of technical feature, the technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in the tables are only examples, and may be configured as other values, which are not limited in the disclosure. When the corresponding relationships between information and parameters are configured, it is not always necessary to configure all corresponding relationships indicated in the tables. For example, in the tables in the present disclosure, the corresponding relationships indicated by some rows may not be configured. For another example, appropriate transformations and adjustments, such as splitting and merging, may be made based on the above tables. Names of parameters shown in the headers in the tables may be other names understandable by the communication apparatus, and the values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined, in the disclosure may be understood as defined, predefined, stored, pre-stored, pre-negotiated, pre-configured, solidified or pre-fired.

Those skilled in the related art may realize that, in combination with units and algorithm steps of the examples described in the embodiments of the present disclosure, may be implemented by the electronic hardware or a combination of the electronic hardware and the computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for controlling a radio frequency (RF) circuit, comprising:
determining a mode of sending and receiving a signal by the RF circuit, based on a working mode of a terminal device where the RF circuit is located and a type of the RF circuit.

2. The method according to claim 1, wherein determining the mode of sending and receiving the signal by the RF circuit, based on the working mode of the terminal device where the RF circuit is located and the type of the RF circuit comprises:
determining a mode of sending a detection signal and receiving a detection feedback signal by the RF circuit, based on the type of the RF circuit, in response to the terminal device working in a detection mode.

3. The method according to claim 2, wherein determining the mode of sending the detection signal and receiving the detection feedback signal by the RF circuit based on the type of the RF circuit comprises:
determining that the RF circuit sends the detection signal and receives the detection feedback signal by adopting different antennas, in response to a sending circuit and a reflection circuit in the RF circuit respectively adopting the different antennas.

4. The method according to claim 3, wherein determining that the RF circuit sends the detection signal and receives the detection feedback signal by adopting the different antennas comprises:
determining that the sending circuit is connected to a main antenna to send the detection signal, and the reflection circuit is connected to a receiving diversity antenna to receive the detection feedback signal, in response to the RF circuit working in a time division duplex (TDD) frequency band within a first frequency range (FR1).

5. The method according to claim 3, wherein the RF circuit comprises two RF sub-circuits, and each of the two RF sub-circuits comprises a sending circuit and a reflection circuit, and determining that the RF circuit sends the detection signal and receives the detection feedback signal by adopting the different antennas comprises:
determining that a sending circuit in one of the two RF sub-circuits is connected to a corresponding antenna array to send the detection signal, and a reflection circuit in the other of the two RF sub-circuits is connected to a corresponding antenna array to receive the detection feedback signal, in response to the RF circuit working in a time division duplex (TDD) frequency band within a second frequency range (FR2).

6. The method according to claim 3, wherein determining that the RF circuit sends the detection signal and receives the detection feedback signal by adopting the different antennas comprises:
determining that the sending circuit in the RF circuit is connected to a main antenna to send the detection signal, and a receiving diversity antenna in the RF circuit is connected to the reflection circuit to receive the detection feedback signal, in response to the RF circuit working in a frequency division duplex (FDD) frequency band within a first frequency range (FR1).

7. The method according to any one of claims 2 to 6, wherein determining the mode of sending the detection signal and receiving the detection feedback signal by the RF circuit based on the type of the RF circuit in the terminal device comprises:
determining that the RF circuit sends the detection signal and receives the detection feedback signal by adopting a same antenna, wherein a sending circuit for sending the detection signal in the terminal device is connected to a reflection circuit for receiving the detection feedback signal via an isolating circuit.

8. The method according to claim 7, wherein determining that the RF circuit sends the detection signal and receives the detection feedback signal by adopting the same antenna comprises:
determining that the sending circuit in the RF circuit is connected to a main antenna via the isolating circuit to send the detection signal, and the reflection circuit in the RF circuit is connected to the main antenna via the isolating circuit to receive the detection feedback signal, in response to the RF circuit working in a time division duplex (TDD) frequency band within a first frequency range (FR1) or working in a frequency division duplex (FDD) frequency band within the FR1, wherein the isolating circuit is configured to isolate the reflection circuit from a sending signal generated by the sending circuit, and isolate the detection feedback signal received from the main antenna from the sending circuit.

9. The method according to claim 7, wherein determining that the RF circuit sends the detection signal and receives the detection feedback signal by adopting the same antenna comprises:
determining that the sending circuit in the RF circuit is connected to an antenna unit via the isolating circuit to send the detection signal, and the reflection circuit in the RF circuit is connected to the antenna unit via the isolating unit to receive the detection feedback signal, in response to the RF circuit working in a time division duplex (TDD) frequency band within a second frequency range (FR2).

10. A terminal device, comprising a radio frequency (RF) circuit, a control circuit and an antenna unit; wherein the RF circuit is connected to the antenna unit; and
the control circuit is connected to the RF circuit, and is configured to control the RF circuit to send and receive a signal based on a working mode of the terminal device and a type of the RF circuit.

11. The terminal device according to claim 10, wherein the antenna unit comprises a main antenna and a receiving diversity antenna, and the RF circuit comprises a sending circuit and a reflection circuit;
the sending circuit is connected to the main antenna, and the reflection circuit is connected to the receiving diversity antenna; and
the control circuit is specifically configured to: control the sending circuit to send a detection signal via the main antenna, and control the reflection circuit to receive a detection feedback signal via the receiving diversity antenna, in response to determining that the terminal device works in a detection mode and the RF circuit works in a time division duplexing (TDD) frequency band within a first frequency range (FR1).

12. The terminal device according to claim 10, wherein the RF circuit comprises a switch unit, and the antenna unit comprises two antenna arrays;
a first connection end of a first switch in the switch unit is connected to one of the two antenna arrays, a second connection end of the first switch is connected to a sending circuit in the RF circuit, and a third connection end of the first switch is connected to a reflection circuit in the RF circuit;
a first connection end of a second switch in the switch unit is connected to the other of the two antenna arrays, a second connection end of the second switch is connected to the sending circuit, and a third connection end of the second switch is connected to the reflection circuit; and
the control circuit is specifically configured to: control the first connection end of the first switch to connect with the second connection end and control the first connection end of the second switch to connect with the third connection end, in response to determining that the terminal device works in a detection mode and the RF circuit works in a time division duplexing (TDD) frequency band within a second frequency range (FR2).

13. The terminal device according to claim 10, wherein the RF circuit comprises a switch unit, and the antenna unit comprises a main antenna and a receiving diversity antenna;
wherein a first connection end of the switch unit is connected to the receiving diversity antenna, a second connection end of the switch unit is connected to a receiving circuit in the RF circuit, and a third connection end of the first switch is connected to a reflection circuit in the RF circuit;
the main antenna is connected to the sending circuit in the RF circuit; and
the control circuit is specifically configured to: control the first connection end of the switch unit to connect with the third connection end, in response to determining that the terminal device works in a detection mode and the RF circuit works in a frequency division duplexing (FDD) frequency band within a first frequency range (FR1).

14. The terminal device according to claim 10, wherein the RF circuit comprises a switch unit;
the RF circuit comprises a sending circuit, a reflection circuit and an isolating circuit;
the sending circuit is connected to a first end of the isolating circuit;
a second end of the isolating circuit is connected to a first connection end of a first switch in the switch unit, a third end of the isolating circuit is connected to the reflection circuit, and the isolating circuit is configured to isolate the reflection circuit from a sending signal generated by the sending circuit, and isolate a received detection feedback signal from the sending circuit;
a second connection end of the first switch in the switch unit is connected to the antenna unit; and
the control circuit is specifically configured to: control the first connection end of the first switch in the switch unit to connect with the second connection end, in response to determining that the terminal device works in a detection mode.

15. The terminal device according to claim 14, wherein the RF circuit further comprises a receiving circuit, and the switch unit further comprises a second switch;
the receiving circuit is connected to a third connection end in the first circuit;
the sending circuit is connected to a first connection end of the second circuit;
a second connection end of the second switch is connected to the first end of the isolation circuit, and a third connection end of the second switch is connected to a fourth connection end of the first switch; and
the control circuit is specifically configured to: control the first connection end of the second switch to connect with the second connection end of the second switch and control the second connection end of the first switch to connect with the first connection end of the first circuit, in response to determining that the terminal device works in the detection mode and the RF circuit works in a time division duplexing (TDD) frequency band within a first frequency range (FR1), or the terminal device works in the detection mode and the RF circuit works in a frequency division duplexing (FDD) frequency band within a first frequency range (FR1), or the terminal device works in the detection mode and the RF circuit works in a time division duplexing (TDD) frequency band within a second frequency range (FR2).

16. The terminal device according to claim 15, wherein the isolating circuit is any one of a circulator, a hybrid junction or a bidirectional coupler.

17. The terminal device according to any one of claims 14 to 16, wherein the RF circuit further comprises a receiver protector; and
one end of the receiver protector is connected to the reflection circuit, and the other end of the receiver protector is connected to a third circuit of the isolating circuit.

18. A communication device, comprising:
a processing module, configured to determine a mode of sending and receiving a signal by the RF circuit, based on a working mode of a terminal device where the radio frequency (RF) circuit is located and a type of the RF circuit.

19. A communication device, comprising a processor and a memory stored with a computer program, wherein when the computer program is executed by the processor, the method according to any one of claims 1 to 9 is implemented.

20. A communication device, comprising a processor and an interface circuit;
wherein the interface circuit is configured to receive code instructions and send the code instructions to the processor; and
the processor is configured to run the code instructions to perform the method according to any one of claims 1 to 9.

21. A computer-readable storage medium for storing instructions, wherein when the instructions are executed, the method according to any one of claims 1 to 9 is caused to be implemented.
